# EUROPÄISCHE PATENTSCHRIFT

(11) **EP 2 034 231 B1**
(45) Veröffentlichungstag und Bekanntmachung des Hinweises auf die Patenterteilung: **13.02.2013**
(21) Anmeldenummer: 08160080.1
(22) Anmeldetag: 10.07.2008
(51) Int. Cl.: F16M 11/32

(54) **Spinne für ein Stativ und Set umfassend die Spinne sowie ein Dreibeinstativ**
Spider for a stand and set containing the spider and a tripod stand
Croisillon pour un statif et kit comprenant un croisillon et un trépied

(30) Priorität: 07.09.2007 DE 202007012585 U
(43) Veröffentlichungstag der Anmeldung: 11.03.2009
(73) Patentinhaber: Camera Dynamics GmbH, 85386 Eching (DE)
(72) Erfinder: Zierer, Robert, 82194 Gröbenzell (DE); Torbitt, Jolyon, Suffolk IP33 3RJ (GB); Dalgoutte, Philip Christopher, Bury St. Edmunds, Suffolk IP33 3JU (GB)
(74) Vertreter: HOFFMANN EITLE

(56) Entgegenhaltungen:
- WO-A-03/008855
- DE-A1- 2 845 509
- DE-U1-202007 012 585
- US-A- 2 282 285
- US-A- 5 769 370
- US-A1- 2006 086 869

## Beschreibung

Die vorliegende Erfindung betrifft eine Spinne für ein Stativ mit drei Standbeinen und insbesondere eine Mittelspinne. Darüber hinaus betrifft sie auch ein multifunktionales Set wenigstens umfassend die besagte Spinne und das Stativ. Insbesondere betrifft die vorliegende Erfindung eine Spinne für Stative zum Einsatz in der Film- und Fernsehindustrie und insbesondere Stative zum Aufnehmen eines Geräts zu diesem Zweck wie beispielsweise einer Kamera oder einer Leuchte.

Im Stand der Technik ist der Einsatz von Spinnen bei Dreibeinstativen gut bekannt, um die Beine des Stativs in der gespreizten Stellung zu stabilisieren und damit die Steifigkeit des Stativs zu erhöhen. Diesbezüglich sind sowohl Bodenspinnen als auch Mittelspinnen bekannt. Bodenspinnen werden im Bereich der Füße des Stativs mit diesem verbunden, wohingegen die Mittelspinne in einem Bereich zwischen den Füßen und einem Koppelstück des Stativs, das ggf. den Stativkopf aufnimmt, an den Standbeinen befestigt wird. Beispiele hierfür finden sich in der US-A-2006/086869, der WO-A-03/008855 oder der US-A-2,282,285.

Insbesondere im Reporterbereich, aber auch beim Filmen von Extremsportarten, beim Erstellen von Dokumentationen oder auch im semi-professionellen Bereich von Hochzeitsvideos und ähnlichem müssen der Kamerasupport stets mit zu den entsprechenden Aufnahmeorten transportiert und ggf. bei schnellen Ortswechseln mit gewechselt werden. Dementsprechend besteht das Bedürfnis für ein modulares System, bei dem Komponenten separat oder in verschiedenartigen Kombinationen verwendet werden können, um die Zahl der Einzelkomponenten die benötigt werden zu reduzieren. Ferner soll das System zu einem angemessenen Preis angeboten werden können, im Betrieb flexibel sowie leicht zu transportieren und aufzubauen zu sein.

Dementsprechend besteht die Aufgabe der vorliegenden Erfindung darin die bekannten Spinnen derart weiterzubilden, dass ein multifunktionales Gerät geschaffen wird, das nicht nur die Funktion der üblichen,Spinne bereitstellen kann, sondern auch eine eigenständige Funktion bietet. Darüber hinaus besteht die Aufgabe der vorliegenden Erfindung auch darin ein Set in Form eines modularen Systems zu schaffen, bei dem die Komponenten separat oder in Kombination (sich ergänzend) genutzt werden können.

Diese obigen Aufgaben werden durch eine Spinne mit den Merkmalen Anspruchs 1 sowie ein Set mit den Merkmalen des Anspruchs 12 gelöst.

Vorteilhafte Weiterbildungen der vorliegenden Erfindung sind in den Unteransprüchen genannt.

Der vorliegenden Erfindung liegt der Gedanke zu Grunde die aus dem Stand der Technik bekannten Spinnen derart weiterzubilden, das sie separat als eigenständiges Stativ zum Aufnehmen z. B. einer Kamera oder Leuchte oder ähnlicher Gerätschaften genutzt werden können sowie darin ein Set aus einer solchen Spinne und einem Dreibeinstativ zu schaffen, bei dem die Spinne entweder - in ihrer Funktion als Spinne - zur Stabilisierung und Steifigkeitserhöhung des Dreibeinstativs oder aber als separates eigenständiges Stativ eingesetzt werden kann.

Dementsprechend umfasst die Spinne der vorliegenden Erfindung, bei der es sich insbesondere um eine Mittelspinne für ein Stativ mit drei Standbeinen und insbesondere ein Stativ zum Aufnehmen eines Geräts zur Nutzung in der Film- und Fernsehindustrie, z. B. einer Kamera, handelt, einen Grundkörper und drei Arme. Die drei Arme der Spinne sind jeweils mit ihrem ersten Ende gelenkig an dem Grundkörper gelagert. D. h. sie sind vorzugsweise um eine Gelenkachse, die senkrecht zur Längserstreckung der Arme verläuft relativ zu dem Grundkörper verschwenkbar. An ihrem zweiten Ende sind sie zum lösbaren Verbinden mit einem entsprechenden Standbein des Stativs mit einem ersten Verriegelungselement einer Verriegelungseinrichtung als Gegenstück zu einem zweiten Verriegelungselement der Verriegelungseinrichtung an dem jeweiligen Standbein versehen. Mit anderen Worten greift das erste Verriegelungselement an dem zweiten Ende jedes Arms in ein entsprechendes zweites Verriegelungselement an dem Standbein des Stativs mit dem der jeweilige Arm der Spinnen zu verbinden ist. Erfindungsgemäß sind die drei Arme der Spinne als Stativbeine ausgestaltet, d. h. sie sind derart ausgestaltet, dass sie in verschiedenen Ausrichtungen zueinander (verschieden Schwenkwinkeln um die oben erwähnte Schwenkachse) nach Art eines Dreibeinstativs auf einem beliebigen Untergrund platzierbar sind, so dass die Spinne auf den drei Armen stehend ein "Mini"-Stativ bildet. Darüber hinaus ist der Grundkörper zur Aufnahme eines Stativkopfes ausgebildet, auf dem beispielsweise die Fernsehkamera montiert werden kann.

Um die Arme gut und standsicher auf dem Untergrund platzieren zu können, weisen die Arme an ihrem zweiten Ende jeweils Füße auf. Diese Füße können in Form von Spikes, vorzugsweise gummierten Spikes ausgebildet sein, die einen sicheren und rutschfesten Stand der Arme auf dem Untergrund bieten, wenn die Spinne als Stativ verwendet wird. Besonders bevorzugt ist die Ausgestaltung der Füße in Form einer Kralle (z.B. der eines Adlers) wobei deren Spitze den erwähnten Spike umfasst. Zusätzlich zu diesen Füßen, die integral mit den Armen ausgebildet oder aber als separates Teil z.B. in die Hohlkörperförmigen Arme (Rohre) eingesteckt sein können, können wahlweise Gummifüße mit vorzugsweise flacher bzw. ebener Aufstandsfläche über das erste Verriegelungselement der Verriegelungseinrichtung lösbar mit dem jeweiligen Arm verbunden werden. D. h. wird die Spinne als Stativ verwendet, so können auf das erste Verriegelungselement des jeweiligen Armes Füße mit einem entsprechenden Gegenstück ähnlich dem zweiten Verriegelungselement an den Armen angebracht und fixiert werden. Wird die Spinnen zu einem späteren Zeitpunkt wieder als Spinne verwendet, so können die Füße wieder angenommen werden, um die Verbindung des ersten Verriegelungselements mit dem zweiten Verriegelungselement an dem Stativ zu ermöglichen.

Das erste oder das zweite Verriegelungselement zum Verbinden der Arme der Spinne mit den jeweiligen Standbeinen des Stativs ist zumindest teilweise hohlzylindrisch ausgestaltet und das entsprechend andere Verriegelungselement ist gleichermaßen hohlzylindrisch ausgestaltet jedoch wenigstens über die Länge des ersten oder zweiten Verriegelungselements derart ausgespart, dass das entsprechend erste oder zweite Verrieglungselement in der Aussparung aufnehmbar ist. Zum Beispiel handelt es sich bei dem anderen Verriegelungselement um ein hohlzylindrisches Verriegelungselement, das über die Länge des entsprechend ersten oder zweiten Verriegelungselements derart ausgespart ist, dass wenigstens die Hälfte des Hohlzylinders weg genommen ist. In den Endbereichen bleibt der Hohlzylinder vorhanden, so das ringförmige Enden gebildet werden, wohingegen im Bereich der Aussparung eine im Querschnitt höchstens halbkreisförmige Schale entsteht. Zum Verriegeln wird das erste oder zweite Verriegelungselement in das entsprechend andere Verriegelungselement eingesetzt, wobei das hohlzylindrische erste oder zweite Verriegelungselement in den ausgesparten Abschnitt des hohlzylindrischen anderen Verriegelungselements greift. Durch Einführen eines Verriegelungsstifts durch die im Querschnitt ringförmigen Enden und den hohlzylindrischen Teil des ersten oder zweiten Verriegelungselements werden die Arme der Spinne an den jeweiligen Standbeinen des Stativs verriegelt, wobei gleichzeitig ein Verschwenken der Arme um die Mittelachse der hohlzylindrischen Verriegelungselemente mit dem Stift als Schwenkachse gestattet ist. Alternativ kann die hohlzylindrische Form des zweiten oder ersten Verriegelungselements im Bereich der Aussparung vollständig unterbrochen sein, wobei an den der Aussparung zugewandten Stirnflächen bzw. Enden der hohlzylindrischen Teile höchstens halbkreisförmige Schultern gebildet sind. Bei dieser Ausführungsform ist es besonders bevorzugt, dass das der Hohlzylinder des ersten oder zweiten Verriegelungselements durch den krallenförmigen Fuß verläuft und an beiden Austrittsflächen einen ringförmigen Kragen zur Auflage auf den erwähnten Schultern bildet. Bei dem Verrieglungsstift handelt es sich vorzugsweise um einen im zweiten oder ersten Verrieglungselement in Verrieglungsrichtung (feder-) beaufschlagten Bolzen bzw. Stift, der eines Endes mit einer Handhabe versehen ist, um den Stift entgegen der Beaufschlagung aus der Verrieglungsstellung und damit außer Eingriff mit dem ersten oder zweiten Verrieglungselement zu bringen.

Zusätzlich ist es bevorzugt, dass der Grundkörper eine mittige durchgehende Aufnahmeöffnung aufweist, die zum Aufnehmen eines Einbeinstativs dient. Vorteilhafterweise handelt es sich bei dem Einbeinstativ um ein Teleskoprohr mit kreisförmigem Querschnitt, so dass auch die Aufnahmeöffnung kreisförmig ist.

Um das Einbeinstativ in der Aufnahmeöffnung fixieren und ggf. beim Verschieben auch abbremsen zu können, ist es bevorzugt eine Klemmeinrichtung zum Verriegeln des Einbeinstativs am Grundkörper vorzusehen. Vorzugsweise handelt es sich bei dieser Klemmeinrichtung um einen eines Endes mit einer Handhabe und anderen Endes mit einem Gewinde versehenen Bolzen, dessen Gewinde in ein Innengewinde einer translatorisch verschiebaren Brems-/Verrieglungsbacke greift, die durch Drehung des Bolzens über die Handhabe gegen das eingestzte Rohr des Einbeinstativs (in Radialrichtung) drückt. Alternativ ist auch ein Nocken denkbar, der direkt oder indirekt über eine Handhabe betätigbar ist und in der verriegelten Stellung auf eine Außenfläche des Einbeinstativs (in Radialrichtung) drückt, um dieses in seiner Längsrichtung zu verriegeln. Bevorzugterweise ist der Nocken integral mit dem um eine Achse verschwenkbar an dem Grundkörper angebrachten Hebel ausgebildet.

Darüber hinaus weist der Grundkörper gemäß einer Ausführungsform der vorliegenden Erfindung eine Befestigungsvorbereitung für den Stativkopf auf, bei es sich vorzugsweise um ein Bauteil nach Art einer Mutter handelt, das mit einem Innengewinde versehen ist, um den Gewindebolzen eines Stativkopfs aufzunehmen. Vorzugsweise wird das Bauteil in die erwähnte Aufnahmeöffnung des Grundkörpers eingesetzt und vorteilhafterweise durch Rasthaken, die über den Umfang verteilt angeordnet sind temporär und lösbar in der Aufnahmeöffnung gehalten, in dem die Rasthaken einen Kragen am Innenumfang der Aufnahmeöffnung hintergreifen.

Darüber hinaus ist die Spinne erfindungsgemäß mit teleskopisch verriegelbaren Armen ausgestaltet, wobei die Arme jeweils aus einer ersten Stufe umfassend parallel verlaufende Schenkel, die über ein Führungselement verbunden sind und einer zweiten Stufe aus wenigstens einem Schenkel, der in dem Führungselement geführt und gehalten ist, aufgebaut sind, so dass ein stabiles sicher stehendes Stativ geschaffen wird, dessen Arme teleskopisch in ihrer Länge veränderbar und in der jeweiligen Stellung verriegelbbar sind.

Um die teleskopisch verschiebbaren Beine in ihrer entsprechenden Relativstellung zu verriegeln ist vorzugsweise in dem Führungselement eine Klemmvorrichtung zum Klemmen der zweiten Stufe vorgesehen. Bei dieser Klemmeinrichtung zum Klemmen der zweiten Stufe kann es sich gleichermaßen, wie bei der oben erwähnten Klemmeinrichtung, zum Klemmen des Einbeinstativs um einen über eine Handhabe betätigbaren Nocken handeln, der in der verriegelten Position (in Radialrichtung) auf die Außenfläche des Schenkels drückt, um diesen zu verriegeln. Die Ausgestaltung der Handhabe mit dem Nocken kann gleichermaßen, wie es oben beschrieben wurde, erfolgen. Alternativ ist es auch möglich eine mit einer Handhabe versehene Schraube z. B. eine Rändelschraube oder vergleichbares zu verwenden, die in der verriegelten Position durch Eindrehen der Schraube in eine durchgehende Gewindebohrung auf die Außenfläche des Schenkels (in Radialrichtung) drückt, um diesen zu verriegeln. Auch die oben in Bezug auf die Verrieglung des Einbeinstativs in der Aufnahmeöffnung erwähnte Ausgestaltung kann aufgegriffen werden. Neben diesen beiden obigen Ausgestaltungen sind selbstverständlich auch andere Verriegelungsmöglichkeiten denkbar, die aus dem Stand der Technik bekannt sind.

Um die Führung in der zweiten Stufe weiter zu verbessern, stützt sich das der ersten Stufe zugewandte Ende des Schenkels der zweiten Stufe beidseits an der Innenseite der parallelen Schenkel der ersten Stufe ab. Hierfür kann es geeignet sein, dass der Schenkel der zweiten Stufe an dem entsprechenden Ende mit einem weiteren Führungselement, z.B. einer Platte, versehen ist, das die beiden Schenkel der ersten Stufe (z.B. durch kreissegmentförmige Aussparungen) teilweise oder aber auch vollständig umgreift und dadurch entlang dieser geführt ist.

Neben der erfindungsgemäßen Spinne schlägt die vorliegende Erfindung auch ein Set bzw. ein multifunktionales System umfassend eine Spinne, wie sie oben erläutert wurde, und ein Dreibeinstativ vor, wobei die Spinnen wahlweise lösbar an dem Dreibeinstativ befestigbar ist oder als eigenständiges Stativ fungiert.

Das System kann vorteilhafterweise durch ein Einbeinstativ ergänzt werden, das wahlweise durch eine Öffnung in einem Koppelstück des Stativs, an dem die drei Stativbeine angelenkt sind, und in die Aufnahmeöffnung der Spinne eingeführt werden und mittels der Klemmvorrichtung der Spinne festlegbar werden. Dadurch wird ein noch multifunktionaleres Set geschaffen, bei dem die Spinne entweder als Spinne zur Stabilisierung und Erhöhung der Steifigkeit des Dreibeinstativs verwendet werden kann oder als eigenständiges Stativ und bei dem das Einbeinstativ eigenständig als Einbeinstativ verwendbar ist oder aber wie zuvor erwähnt in die Kombination aus Dreibeinstativ und Spinne eingesetzt werden kann, um ein Stativ mit Mittelstange und teleskopischer Verlängerungsmöglichkeit zu schaffen.

Hierzu ist es selbstverständlich bevorzugt, dass das Einbeinstativ ein Teleskoprohr ist, d. h. teleskopisch verlängerbar ist. Dabei umfasst das Einbeinstativ eine weitere Klemmvorrichtung zum Fixieren der Relativposition der das Teleskoprohr bildenden ineinander schiebbaren Teilrohre. Diese Klemmvorrichtung kann beispielsweise derart ausgestaltet sein, dass sie aus einem konischen Ring (Innenring) besteht, auf den ein weiterer Ring (Außenring) mit einem Gegenkonus aufgeschraubt wird, um den Konus des Innenrings gegen das Rohr (in Radialrichtung) zu drücken. Durch Festschrauben des Außenrings mit seinem Gegenkonus wird über den Innenkonus der Innenring gegen das Innenrohr gedrückt und damit die Relativposition der Rohre festgelegt. Alternativ ist jedoch auch die Nocken/Hebel- oder Schraubalternative denkbar, die oben erwähnt wurden.

Darüber hinaus ist zur Stabilisierung des Einbeinstativs in Kombination mit Spinne und Dreibeinstativ das Koppelstück des Stativs ebenfalls mit einer Klemmeinrichtung zum Festlegen des Einbeinstativs auszugestalten. Dabei können die Klemmeinrichtungen des Stativs sowie der Spinne gleich ausgestaltet sein, z. B. wie es oben erwähnt wurde durch einen über eine Handhabe betätigbaren Nocken, der in der verriegelten Position auf die Außenfläche des Einbeinstativs (in Radialrichtung) drückt, oder in einer beliebigen anderen Ausgestaltung.

Schließlich ist es selbstverständlich auch bevorzugt, dass die Stativbeine, d. h. die Standbeine des Stativs teleskopisch sind. Hierfür sind verschiedenartige Systeme denkbar, wie sie aus dem Stand der Technik bekannt sind.

Durch die erfindungsgemäße Spinne wird ein multifunktionales Gerät geschaffen, das sowohl als Spinne zur Stabilisierung eines Dreibeinstativs, als auch als eigenständiges Stativ eingesetzt werden kann. Darüber hinaus schafft das erfindungsgemäße Set insbesondere auch in Kombination mit dem Einbeinstativ ein sehr flexibles und modulares System, das auf verschiedenartigste Weise eingesetzt werden kann und bei dem die Komponenten sowohl separat als auch in verschiedenartigen Kombinationen zum Einsatz kommen können. Darüber hinaus ist dieses System unter Berücksichtigung der Multifunktionalität aus nur wenigen Teilen zusammengesetzt und lässt sich leicht und gut transportieren, ohne dass der Aufbau bzw. das Abbauen mit komplexen Vorgängen verbunden wären.

Weitere Vorteile und Merkmale der vorliegenden Erfindung werden aus der folgenden Beschreibung einer bevorzugten Ausführungsform unter Bezugnahme auf die begleitenden Zeichnungen ersichtlich. In den Zeichnungen sind gleiche oder ähnliche Elemente der Einfachheit halber mit gleichen Bezugszeichen versehen. Darüber hinaus zeigen in den Zeichnungen:
Fig. 1 perspektivisch das modulare Set der vorliegenden Erfindung in a) in Verwendung der Spinnen als Stativ; b) in Verwendung der Spinne zur Stabilisierung eines Dreibeinstativs; c) der Verwendung eines Einbeinstativs als separates Stativ und d) der Verwendung der Spinne als zur Stabilisierung eines Dreibeinstativs und des Einbeinstativs als Mittelrohr des Dreibeinstativs;
Fig. 2 eine schematische und vergrößerte Darstellung der Verriegelung eines Spinnenarms mit einem Standbein des Stativs;

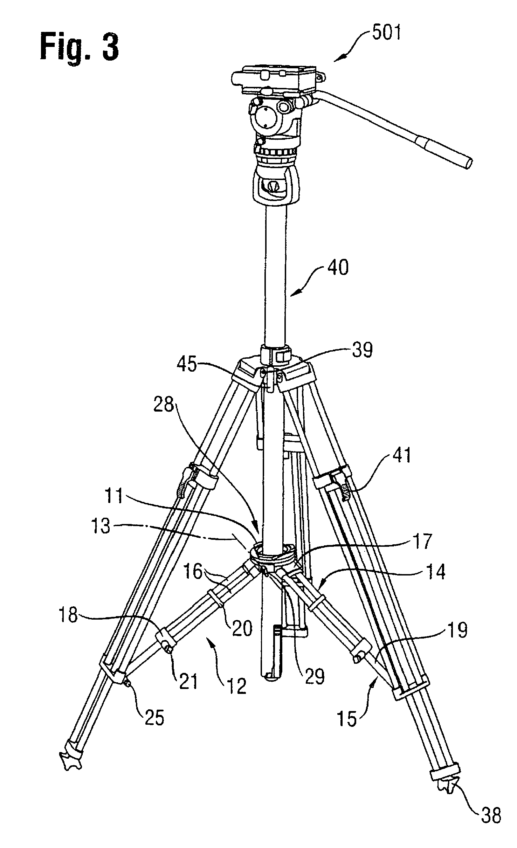

Fig. 3 die Darstellung aus Fig. 1d) in größerem Maßstab.
Fig. 4a) bis d) eine alternative Ausgestaltung der erfindungsgemäßen Spinne perspektivisch aus vier verschiedenen Richtungen zeigen;
Fig. 5 die Kombination aus der in Fig. 4 dargestellten Spinne mit einem Dreibeinstativ in Perspektive im maximal ausgefahrenen Zustand darstellt;
Fig. 6 das in Fig. 5 dargestellte Stativ a) alleine im eingefahrenen Zustand perspektivisch und b) teilweise vergrößert von schräg oben darstellt;
Fig. 7a) bis c) eine alternative Ausführungsform eines Einbeinstativs perspektivisch und in Teilvergrößerungen zeigt;
Fig. 8 eine Befestigungsvorbereitung zum Befestigen eines Stativkopfs an der Spinnen, dem Stativ oder dem Einbeinstativ perspektivisch darstellt;
Fig. 9 das erste Verriegelungselement im unteren Bereich eines Arms der erfindungsgemäßen Spinne aus Fig. 4 vergrößert darstellt;
Fig. 10 das zweite Verriegelungselement an dem Stativ in vergrößerter Darstellung perspektivisch darstellt.

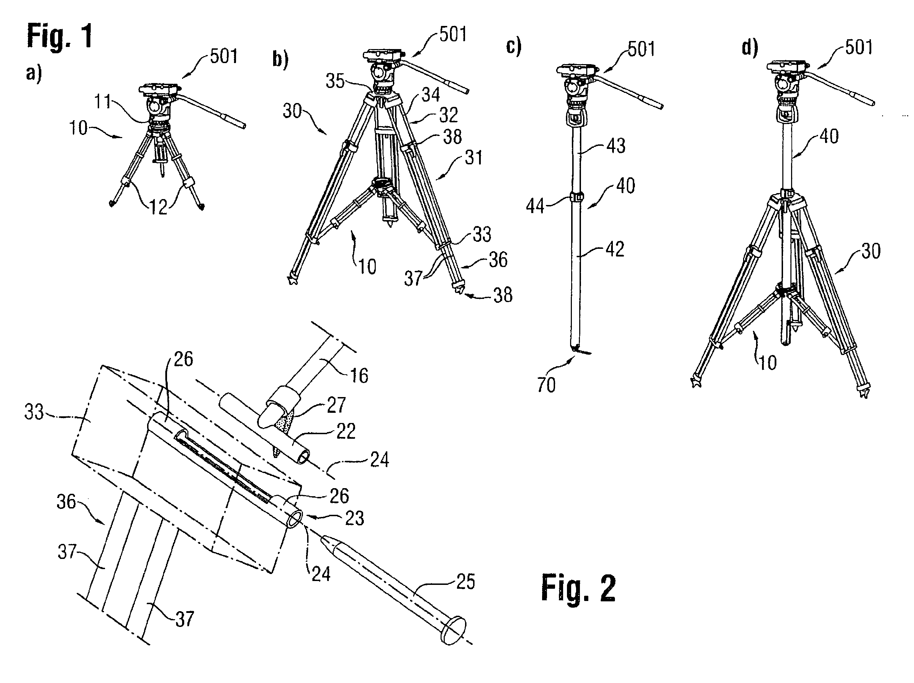

Fig. 1a zeigt eine erfindungsgemäße Spinne 10 in ihrer Verwendung als Stativ. In Fig. 1b ist die Spinne zur Stabilisierung eines Dreibeinstativs 20 mit diesem verbunden.

Die Spinne umfasst einen Grundkörper 11 und drei gelenkig mit diesem verbundene Arme 12. Dabei sind die Arme 12 um eine Schwenkachse 13 im Wesentlichen senkrecht zu ihrer Längserstreckung verschwenkbar an dem Grundkörper 11 angebracht.

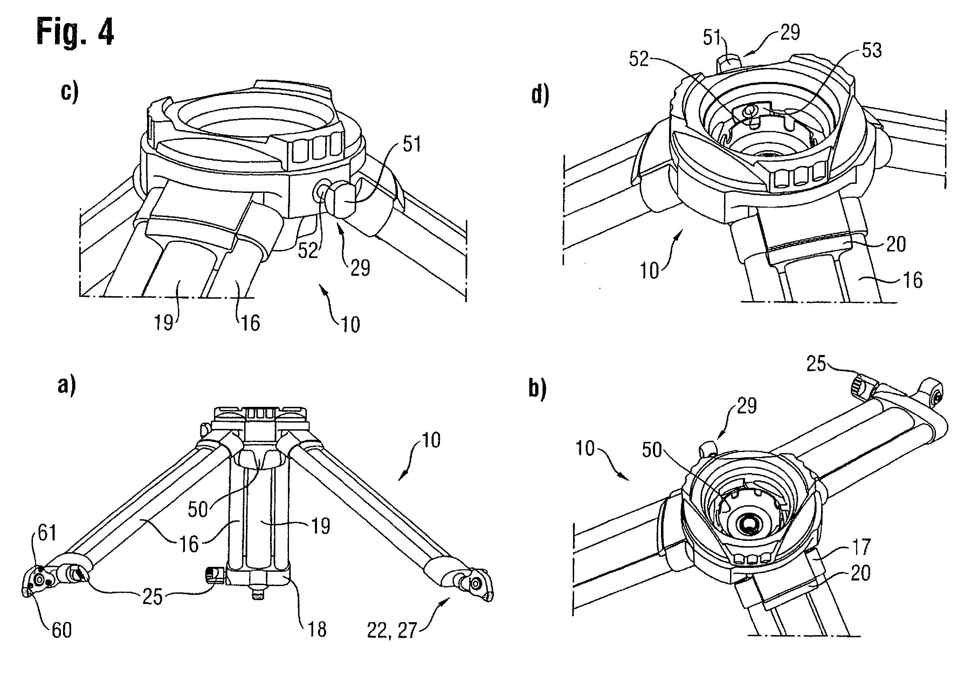

Die Arme 12 setzen sich bei der dargestellten Ausführungsform aus einer ersten Stufe 14 und einer zweiten Stufe 15 zusammen. Die erste Stufe bildet sich aus zwei parallel zueinander verlaufenden im Querschnitt kreisförmigen Stangen oder Rohren 16, die auch als Schenkel der ersten Stufe 14 bezeichnet werden. Diese sind über ein Verbindungselement 17 miteinander verbunden, welches wiederum um die Achse 13 verschwenkbar an dem Grundkörper 11 angelenkt ist. Anderen Endes der Schenkel 16 sind diese gleichfalls über ein weiteres Element bzw. Führungselement 18 miteinander verbunden. In diesem Führungselement 18 ist eine Durchgangsöffnung (nicht dargestellt) ausgebildet, durch die der im Querschnitt kreisförmige Schenkel (Stange oder Rohr) 19 der zweiten Stufe 15 tritt und dadurch geführt ist. Des Weiteren ist an dem der ersten Stufe 14 zugewandten Ende des Schenkels 19 eine Platte 20 als weiteres Führungselement befestigt, die beidseits des Schenkels 15 die Schenkel 16 der ersten Stufe 14 teilweise umschließt und damit den ersten Schenkel 19 an diesen Schenkeln 16 beidseits abstützt (Siehe diesbezüglich auch die größere Darstellung in Fig. 4).

Im Bereich der Durchgangsöffnung ist an dem Führungselement 18 des Weiteren eine Klemmeinrichtung 21 in Form einer Schraube vorgesehen, deren Kopf händisch betätigbar ist. Durch Einschrauben der Schraube wird diese in Radialrichtung des Schenkels 19 bewegt und drückt entweder in der verriegelten Position derart auf die Außenfläche des Schenkels 19, dass dieser fixiert wird oder bewegt eine translatorisch verschiebbare Backe (siehe spätere Beschreibung der Verriegelung des Einbeinstativs), die dann wiederum in der verriegelten Position derart auf die Außenfläche des Schenkels 19 drückt.

An dem der Platte 20 entgegengesetzten Ende des Schenkels 16 ist ein erstes Verriegelungselement 22 (Fig. 2) ausgestaltet. Diesbezüglich sei angemerkt, dass selbstverständlich auch an dem zweiten Schenkel 16 ein weiterer Schenkel aufgenommen sein kann, der relativ zu dem Schenkel 16, der dann als Hohlrohr ausgestaltet ist, teleskopartig verschiebbar und in einer entsprechenden Relativposition verriegelbar ist. An dem Schenkel 16 oder einem ggf. weiteren Schenkel ist, wie erwähnt, das erste Verriegelungselement 22 befestigt. Des Weiteren ist an diesem Ende auch ein gummierter spike-artiger Fuß 27 integral vorgesehen, der bei Verwendung der Spinne 10 als Stativ (Fig. 1a) zum Einsatz kommt. Alternativ ist es auch denkbar wahlweise einen Fuß mit einer flachen Aufstandsfläche, vorzugsweise aus Gummi, zu verwenden, der lösbar an dem ersten Verriegelungselement 22 anbringbar ist und zwar auf gleiche Art und Weise wie dieses erste Verriegelungselement 22 mit einem Standbein 31 des Stativs verriegelbar ist (siehe folgende Beschreibung).

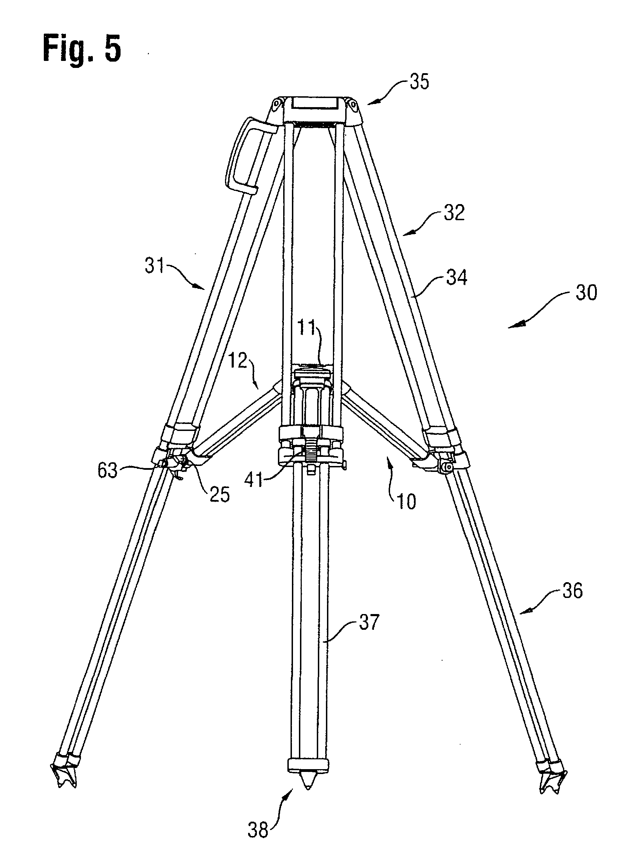

Für letzteres umfasst das Stativ ein zweites Verriegelungselement 23. Bei der dargestellten Ausführungsform ist das Verriegelungselement 23 an einem Verbindungsstück 33 der ersten Stufe eines jeweiligen Standbeins 31 des Stativs 30 angebracht. Dabei sind die Stativbeine 31 ähnlich ausgestaltet wie die Arme 12 der Spinne. D. h. die erste Stufe besteht gleichermaßen aus zwei parallel verlaufenden Schenkeln 34, die über das Verbindungsstück 33 sowie ein Koppelstück 35 des Stativs 30 zur Aufnahme eines Stativkopfs (siehe später) verbunden sind. Statt nur einem Schenkel 19 als zweite Stufe 36 vorzusehen, umfasst bei dem Stativ auch die zweite Stufe zwei Schenkel 37, die gleichermaßen wie der eine Schenkel 19 der Arme 12 der Spinne 10 in dem Führungselement 33 geführt sind. Des Weiteren ist ähnlich der Platte 20 bei der zweiten Stufe 36 auf der der ersten Stufe 32 zugewandten Seite ein weiteres Führungselement 38 mit den zwei Schenkel 37 verbunden, wobei dieses jedoch die Schenkel 34 der ersten Stufe vollständig umgibt (siehe auch Fig. 5). Auch die Verriegelung an dem Verbindungselement 33 erfolgt vorzugsweise über einen Hebel 41, der einen Nocken aufweist, welcher in der verriegelnden Position des Hebels in Radialrichtung direkt oder indirekt auf die Schenkel 37 der zweiten Stufe 36 drückt. Es versteht sich, dass das Stativ 30 gleichermaßen wie die Spinne 10 mit nur einem Schenkel 19 ausgestaltet sein kann oder aber die Spinne 10 statt dem Schenkel 19 mit zwei Schenkeln ähnlich der Stativschenkel 37. Auch andere Gestaltungen der teleskopartigen Beine, wie sie aus dem Stand der Technik bekannt sind, sind denkbar, was auch auf die Verriegelungs- und Klemmmechanismen zur Fixierung der Relativpositionen der einzelnen Stufen gilt.

Das erste Verriegelungselement 22 ist bei der dargestellten Ausführungsform hohlzylindrisch ausgestaltet und weist in seiner Längsrichtung entlang der Mittelachse 24 des Hohlzylinders eine gewisse Breite bzw. Länge auf.

Das zweite Verriegelungselement 23 ist gleichermaßen hohlzylindrisch ausgestaltet jedoch in seiner Gesamtbreite entlang der Mittelachse des Hohlzylinders länger ausgestaltet als das erste Verriegelungselement 22. Zwischen den beiden Enden des Hohlzylinders des zweiten Verriegelungselements 23 ist wenigstens entsprechend der Breite des Hohlzylinders 22 bzw. dessen Länge der Hohlzylinder des zweiten Verriegelungselements 23 derart ausgespart, dass er in diesem Bereich im Querschnitt höchstens halbkreisförmig ist, so dass das Verriegelungselement 22 in diese Aussparung bzw. Schale eingesetzt werden kann und damit den Hohlzylinder komplettiert. Zum Verriegeln wird ein Verriegelungsstift 25 eingeführt, so dass er die im Querschnitt ringförmigen Enden 26 des zweiten Verriegelungselements 23 sowie durch den Hohlzylinder des zweiten Verriegelungselements 22 dringt und die beiden Elemente 22, 23 koppelt. In Bezug auf Fig. 2 sei angemerkt, dass das Verbindungselement 23 nur gestrichelt dargestellt ist, um die Verriegelung besser darstellen zu können, aber eigentlich vor den Verrieglungselement bzw. außerhalb von diesen liegt.

Der Grundkörper 11 der Spinne 10 ist ferner derart ausgestaltet, dass er eine Aufnahmeöffnung 28, bei der es sich um eine kreisrunde Öffnung handelt, definiert, um ein Einbeinstativ 40 (Fig. 1c) aufnehmen zu können. Ferner ist in dem Grundkörper 11 eine Klemmeinrichtung 29 vorgesehen, um das Einbeinstativ 40 zu verriegeln. Zu diesem Zweck kann eine handbetätigbare Schraube 29 vorgesehen sein, die beim Eindrehen in Radialrichtung des Einbeinstativs 40, das als Teleskoprohr ausgestaltet ist (siehe später) wandert und die direkt gegen die Außenfläche des Rohrs des Einbeinstativs 40 drückt, um dieses zu verriegeln. Alternativ ist selbstverständlich auch hier eine Klemmung über eine Hebelnockenverbindung denkbar, die gleichermaßen selbstverständlich auch für die Klemmeinrichtung 21 der Arme 12 der Spinne 10 eingesetzt werden könnte. Eine weitere Variante wird später in Bezug auf Fig. 4 erläutert.

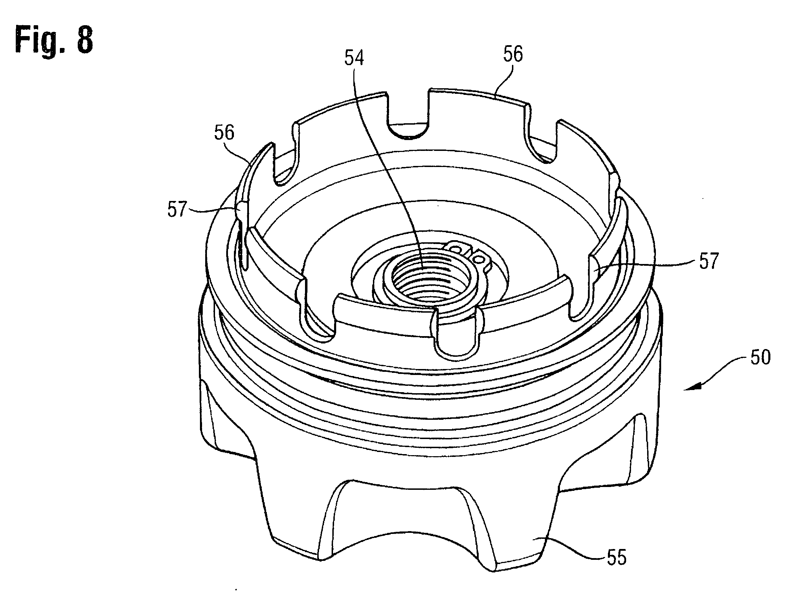

Gleichermaßen ist der Grundkörper 11 dazu geeignet einen Stativkopf 501 zum Aufnehmen beispielsweise einer Kamera aufzunehmen. Hierfür weist dieser vorzugsweise eine Befestigungsvorbereitung 50 auf, die später in Bezug auf Fig. 8 erläutert wird.

Das Stativ 30 weist, wie bereits erwähnt, ebenfalls drei Standbeine 31 mit jeweils zwei Stufen 32 und 36 auf, wobei die erste Stufe 32 bzw. deren Schenkel 34 um eine Gelenkachse 39 verschwenkbar mit dem Koppelstück 35 des Stativs 30 verbunden sind. Diese Schwenkachse 39 verläuft gleichermaßen wie die Schwenkachse 13 im Wesentlichen senkrecht zur Längserstreckung der Standbeine 31 (Hebel 41). Darüber hinaus weisen die Beine 31 an ihrem entgegengesetzten Ende gleichermaßen Füße 38 in Form von Spikes auf. Ferner ist eine Vorbereitung getroffen, um Füße mit ebener Standfläche, vorzugsweise Gummifüße (nicht dargestellt) montieren zu können, die in diesem Fall die Spikes ersetzen, obwohl die Spikes am Stativ verbleiben.

Wie bereits erwähnt, handelt es sich bei dem in Fig. 1c dargestellten Einbeinstativ um ein Teleskoprohr bestehend aus einem Außenrohr 42 und einem Innenrohr 43, die relativ zueinander verschiebbar sind. Um die Relativposition der Rohre 42, 43 zu fixieren, weist das der Standfläche entgegengesetzte Ende des Rohr 42 ein Außengewinde auf, auf das ein Außenring 44 aufschraubbar ist. Dieser Außenring 44 weist einen Innenkonus auf, der auf einen entsprechenden umgekehrt gerichteten Gegenkonus eines nicht dargestellten Innenring drückt, wenn der Außenring 44 auf das Gewinde geschraubt wird. Dieser Innenring drückt in diesem Zustand (festgezogenem Außenring 44) radial auf das Innenrohr 43, um dieses zu fixieren. Darüber hinaus ist auch im Koppelstück 35 des Stativs 30 eine Öffnung vorgesehen, die es gestattet das Einbeinstativ 40 bzw. das Rohr 42 des Einbeinstativs 40 einzuführen sowie eine Befestigungsvorbereitung 50 einzusetzen (siehe später). Darüber hinaus ist im Bereich dieser Öffnung ein weiterer Klemmmechanismus 45 in Form eines Hebels vorgesehen, der einen Nocken betätigt, der integral oder separat zu dem Hebel 45 ausgestaltet sein kann und in verriegelter Position des Hebels gegen die Außenfläche des Rohrs 42 in dessen Radialrichtung drückt, um das Rohr in dem Koppelstück 35 zu fixieren (siehe auch später).

Der Grundkörper 11 der Spinne 10 kann z. B. zur Aufnahme eines 75 mm Fluidkopfes ausgestaltet sein, wohingegen das Koppelstück 35 neben der Aufnahmemöglichkeit für das Einbeinstativ 40 zur Aufnahme eines 100 mm Fluidkopfs geeignet ist. Es jedoch auch der Aufsatz anderer Stativköpfe denkbar zum Beispiel über Adapter oder andere Befestigungsvorbereitungen 50.

Das grundsätzliche modulare Set der vorliegenden Erfindung setzt sich aus der Spinne 10 und dem Stativ 30 zusammen. Dieses modular Konzept bietet die Möglichkeit die Spinne 10 separat als eigenständiges Stativ zu verwenden und einen Stativkopf 501 auf dem Grundkörper 11 zu befestigen oder aber die Spinne 10 in Kombination mit dem Stativ 30 einzusetzen und über die Verriegelungselemente 22, 23 sowie den Stift 25 zu verbinden und dadurch das Stativ 30 zu stabilisieren.

Ein erweitertes Set kann ferner das Einbeinstativ 40 umfassen. Dieses kann separat wie in Fig. 1c dargestellt genutzt werden, indem ein Stativkopf 501 (ggf. über eine Befestigungsvorbereitung 50) damit verbunden wird oder aber alleine mit dem Stativ 30 (nicht dargestellt) bevorzugterweise jedoch mit der Kombination aus Stativ 30 und Spinne 10 (Fig. 1d). Dadurch wird ein Stativ mit ausfahrbarem Mittelpfosten (Einbeinstativ 40) geschaffen.

Es wird ersichtlich, dass dieses System bestehend aus Stativ 30 und Spinne 10 sowie ggf. dem Einbeinstativ 40 sehr flexibel und verschiedenartig einsetzbar ist. Dazu sind auch keine komplizierten Montagevorgänge notwendig.

Wird die Spinne 10 als Stativ verwendet, muss lediglich ein Stativkopf 501 auf dem Grundkörper 11 fixiert werden. Wird die Spinne 10 zur Stabilisierung des Stativs 30 eingesetzt, wird sie lediglich über die einfache Verbindung der Arme 12 mit den Standbeinen 31 und die Verriegelungselemente 22, 23 und 25 verriegelt. Dann muss lediglich der Kamerakopf 50 auf das Koppelstück 35 aufgesetzt werden. Wird das Einbeinstativ 40 alleinig verwendet, so wird es lediglich mit dem Stativkopf 501 verbunden. Soll die Kombination verwendet werden, wie sie in Fig. 1d dargestellt ist, so wird die Spinne 10, wie zuvor beschrieben, in das Stativ 30 eingesetzt und das Außenrohr 42 durch die Öffnung in dem Koppelstück 35 des Stativs 30 eingeführt und durch die Aufnahmeöffnung 28 des Grundkörpers 11 der Spinne 10 geführt. Dazu werden die Befestigungsvorbereitungen 50 entfernt. Ist diese Kombination entsprechend ausgerichtet, so dass die Beine des Stativs 31 entsprechend auf dem Untergrund positioniert sind, so werden die Beine bzw. die Arme des Stativs 31 fixiert sowie das Einbeinstativ 40 über die Klemmungen 29 und 45 geklemmt.

Es ist ersichtlich, dass zur Verwendung dieses sehr flexibel einsetzbaren Systems nur simple Montagevorgänge notwendig sind, die einen schnellen und flexiblen Einsatz zulassen.

Darüber hinaus besteht der modulare Aufbau aus nur wenigen Teilen, die leicht und gut zu transportieren sind. Hierfür kann es vorteilhaft sein, wenn das Set zusammen in einer gemeinsamen Tasche transportierbar ist.

Die in Fig. 4 dargestellte Spinne unterscheidet sich von der in Fig. 1a dargestellten Spinne insbesondere durch die Verriegelung der Arme 12 mit den Standbeinen 31 des Stativs 30. Darüber hinaus ist aus diesen Darstellungen die Klemmeinrichtung 25 zum Klemmen der ersten und zweiten Stufe der Beine 12 genauer dargestellt.

Neben der später beschriebenen Verriegelung der Spinne 10 mit dem Stativ 30 ist auch die Verriegelungseinrichtung 29 zum Klemmen des Einbeinstativs 40 geringfügig anders ausgestaltet. So handelt es sich um einen mit einer Handhabe 51 versehenen, drehbar gelagerten Bolzen 52, der an seinem der Handhabe 51 entgegengesetzten Ende mit einem Gewinde versehen ist. Dieses Gewinde greift in ein Innengewinde einer Backe 53. Durch die Rotation des Bolzens 52 über die Handhabe 51 wird die Backe 53 in Radialrichtung des Außenrohrs 41 vorgeschoben, um dieses zu klemmen. Hiefür kann eine vorgegebene maximale Umdrehungszahl des Bolzens 52 dazu dienen ein zu starkes Klemmen zu verhindern. Z. B. kann hierfür eine Vierteldrehung oder eine halbe Drehung vorgesehen sein.

Um das Einbeinstativ 40 in den Grundkörper 11 einzusetzen, ist die Befestigungsvorbereitung 50 nicht eingesetzt, die lediglich zur Montage eines Stativkopfs dient. Hierzu wird der Stativkopf oben auf den Grundkörper 11 aufgesetzt und umfasst eine durch die Aufnahmeöffnung 28 ragende Gewindeschraube (nicht dargestellt). Diese greift in ein Innengewinde 54 der Befestigungsvorrichtung 50, die folglich als Mutter fungiert und über den Handhabebereich 55 festgezogen wird, um den Stativkopf 501 zu fixieren. Die über den Umfang verteilten Rippen 56, die durch Aussparungen unterbrochen sind und nach außen vorragende Nasen 57 umfassen, bilden Rasthaken zum temporären Halten der Befestigungsvorbereitung 50 in der Aufnahmeöffnung 28 in dem die Rasthaken einen am Innenumfang der Aufnahmeöffnung 28 umlaufenden Kragen hintergreifen (siehe Fig. 4). Bezüglich der genauen Ausgestaltung der Befestigungsvorbereitung 50 wird insbesondere auf Fig. 8 verwiesen.

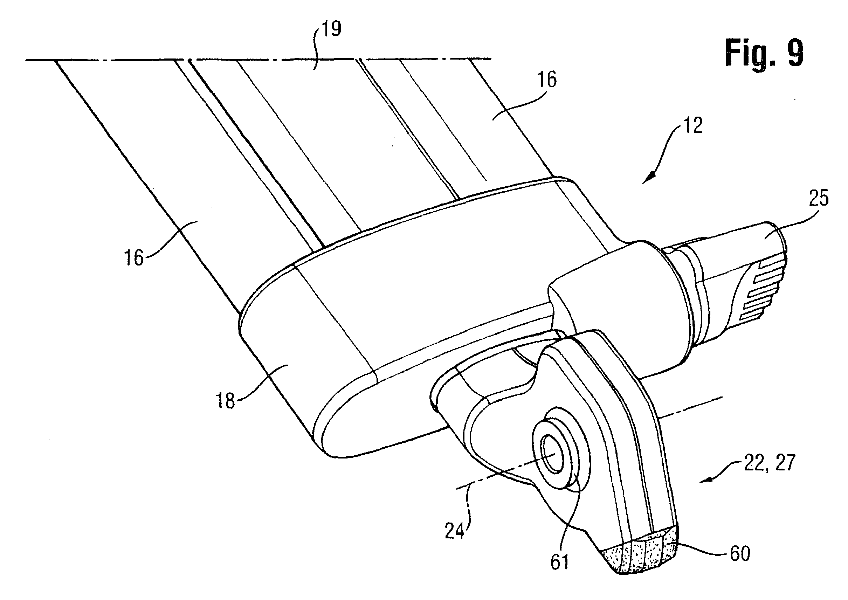

Wie bereits erwähnt wurde, unterscheidet sich die Spinne 10 aus Fig. 4 gegenüber den Darstellungen aus Fig. 1a und 2 auch durch das erste Verriegelungselement. Dieses ist nach wie vor an dem der ersten Stufe 14 abgewandten Ende des Schenkels 19 angebracht (siehe diesbezüglich insbesondere auch Fig. 9). Dabei erstreckt sich von diesem Ende des Schenkels 19 ein krallenförmiger Fuß 27, dessen Spitze aus einem spikeartigen Gummiteil 60 gebildet ist. In diesem Fuß 27 ist das erste Verriegelungselement 22 integriert. Dieses wird durch eine hohlzylinderförmige Durchgangsbohrung gebildet und durchdringt den Fuß 27. Die hohlzylindrische Durchgangsbohrung weist dabei an beiden Seitenflanken des Fußes 27 jeweils einen Kragen 61 auf. Mit anderen Worten ist ein Hohlzylinder durch den Fuß geschoben und ragt an beiden Seiten des Fußes eine gewisse Strecke von den Seitenflächen vor, um den Kragen zu bilden.

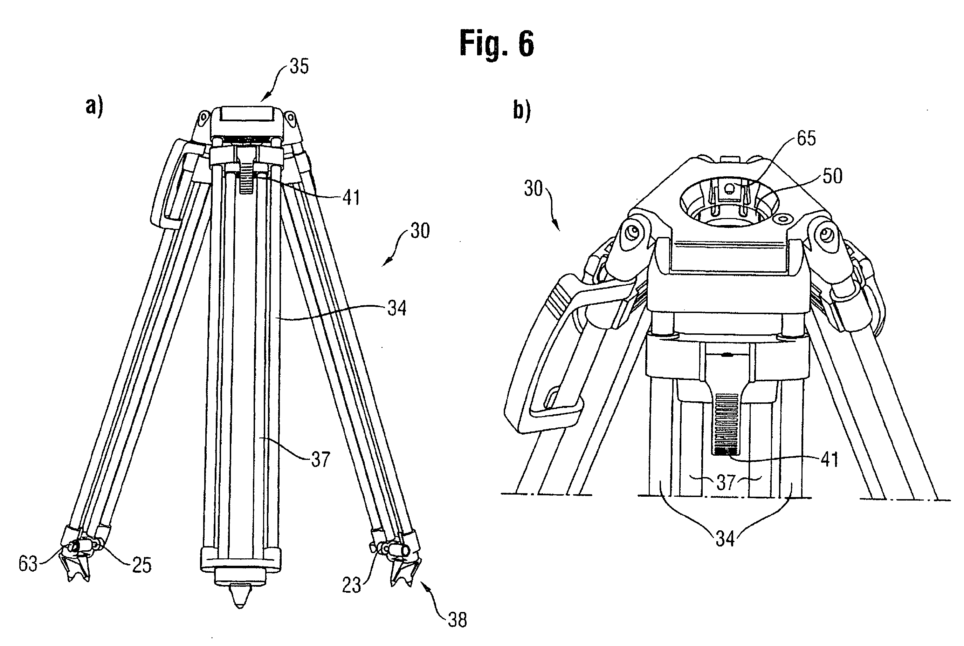

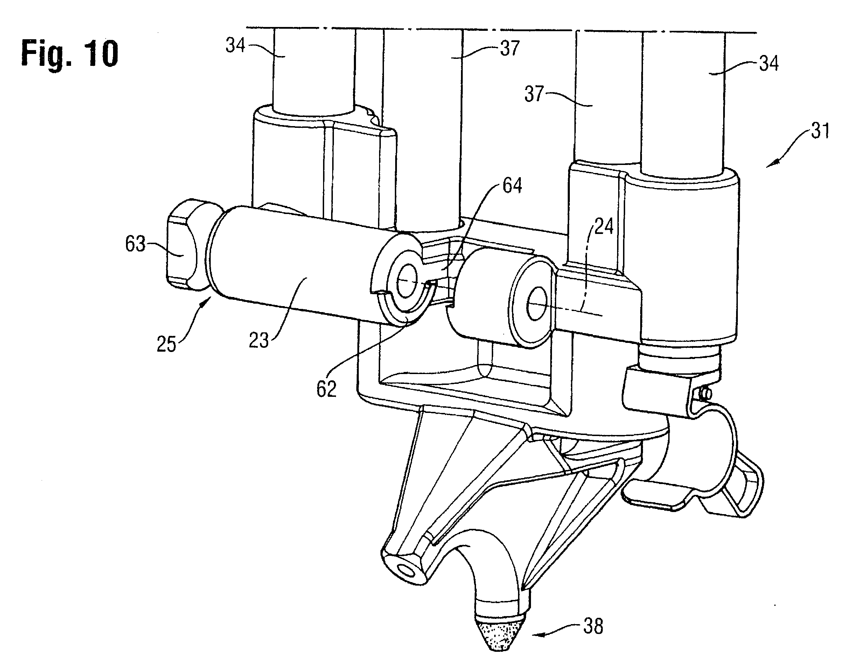

Zum Verbinden der in Fig. 4 dargestellten Spinne 10 mit einem Stativ 30, wie es beispielsweise in Fig. 6 dargestellt ist, kooperiert das erste Verriegelungselement 22 mit dem am Stativ vorgesehenen zweiten Verriegelungselement 23. Dieses in Fig. 10 vergrößert dargestellte zweite Verriegelungselement 23 ist gleichermaßen hohlzylindrisch ausgestaltet jedoch mittig entsprechend der Breite des Abstands zwischen den Stirnflächen der Krägen 61 vollständig ausgespart, wobei beidseits des Hohlzylinders in der Aussparung halbkreisförmige bzw. halbringförmige Schulterabschnitte vorgesehen sind. Darüber hinaus ist der Stift 25 in Verriegelungsstellung durch eine Feder (nicht dargestellt) vorgespannt und mit einer Handhabe 63 verbunden, über die entgegen der Federkraft der Stift 25 aus der Aussparung 64 gezogen werden kann. In Fig. 10 ist der Stift 25, der in die Aussparung ragt nicht dargestellt. Er ist jedoch aus Fig. 6 ersichtlich. Ist der Fuß 27 des jeweiligen Arms 12 der Spinne 10, wie er in Fig. 4 dargestellt ist, entsprechend in die Aussparung 64 eingesetzt, liegt er mit den Krägen 61 des ersten Verriegelungselements 22 auf den Schultern 62 auf. Um den Fuß einsetzen zu können, wird über die Handhabe 63 der Stift 25 entgegen der Federkraft aus der Aussparung 64 gezogen. Nach dem Einsetzen wird die Handhabe 63 freigegeben und der Stift 25 rastet über die Federkraft ein und durchdringt das hohlzylindrische Verriegelungselement 61 sowie auch den in Fig. 10 dargestellten rechter Hand der Aussparung 64 vorgesehenen hohlzylindrischen Abschnitt des zweiten Verriegelungselements 23, um die Kopplung des Spinnenarms 12 mit dem Stativarm 31 abzuschließen.

Zum Montieren eines Stativkopfs auf das Stativ 30 kommt eine ähnliche Befestigungsvorbereitung 50, wie sie in Fig. 8 dargestellt ist und für das kleine Stativ bzw. die Spinne 10 gedacht ist zum Einsatz. Diese können sich lediglich hinsichtlich der Größe (Durchmesser) unterscheiden. Das Prinzip ist jedoch das Gleiche, so dass es keiner weiteren Erläuterung bedarf.

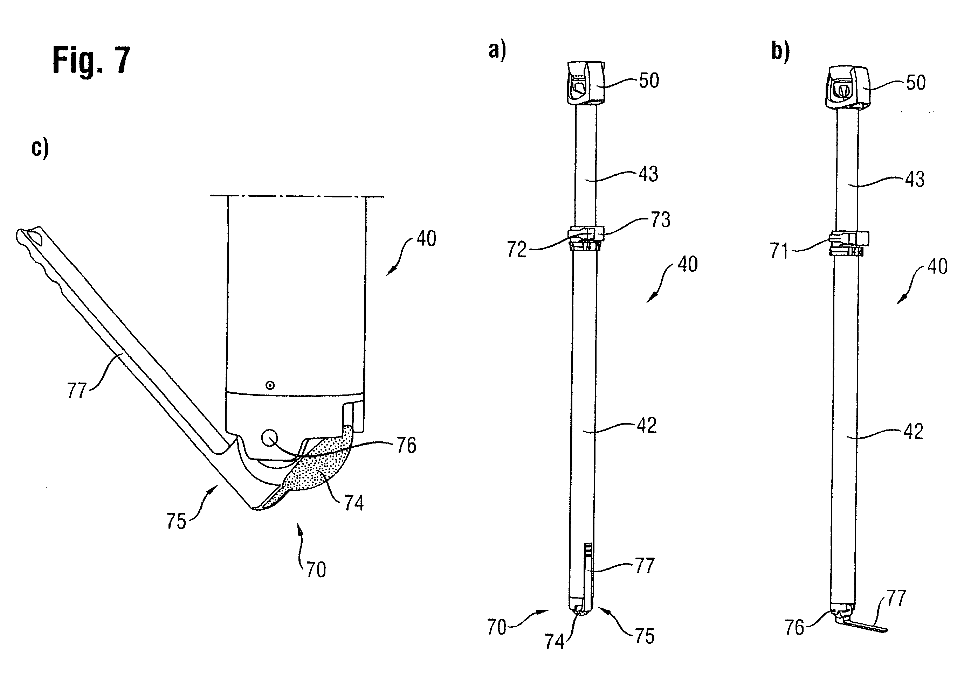

Schließlich zeigt Fig. 7 das Einbeinstativ 40 aus Fig. 1c in Perspektive und einer alternative Ausgestaltung. Dabei unterscheidet sich das Einbeinstativ von dem in Fig. 1c dargestellten, insbesondere durch den Klemmmechanismus zum Verriegeln der Teleskoprohre 42 und 43. Hierbei wird ein Hebel 71 mit einem integral ausgebildeten Nocken 72 eingesetzt, in der in Fig. 7 dargestellten verriegelten Position drückt der Nocken 72 einen geschlitzten Ring 73 zusammen, um den Außenumfang des Rohrs 43 zu greifen. Der Ring 73 mit dem Hebel 71 und dem Nocken 72 ist dabei an dem Außenrohr 42 befestigt. Die Befestigung eines Stativkopfs 501 mit dem Einbein 40 erfolgt auf ähnliche Art und Weise, wie bei der Spinne 10 und dem Stativ 30 über eine Befestigungsvorbereitung 50, die vom Prinzip her gleich ausgestaltet ist, wie in Fig. 10 dargestellt, so dass es keiner weiteren Erläuterung bedarf.

Darüber hinaus wird unter Bezugnahme auf Fig. 7 der Fuß des Einbeinstativs 40 erläutert. Dieser ist mit einem kugelsegmentförmigen gummierten Abschnitt 74 versehen, der auf einem Hebel 75 bzw. dessen nach unten weisender Fläche angebracht ist. Der Hebel 75 ist um eine Schwenkachse 76 in dem Außenrohr 42 verschwenkbar gelagert, die im Wesentlichen senkrecht zur Längserstreckung des Einbeinstativs 40 verläuft. Darüber hinaus weist der Hebel 75 einen Schenkel 77 auf, der durch Verschwenken des Hebels 75 um die Achse 76 zur Anlage mit dem Boden bzw. Untergrund gebracht werden kann, wie es in der Darstellung von Fig. 7 c) dargestellt ist. In diesem Zustand dient der Schenkel 77 zum Aufstellen eines Fußes, so dass der Hebel 75 auch als Fußstütze bezeichnet werden kann. Dadurch kann ein Mitdrehen des Rohrs beim Kameraschwenk verhindert werden, um die Vorteile der Kameradämpfung, die durch den Stativkopf (Fluidkopf) bereitgestellt wird, vollständig zu nutzen, ohne dass sich das Einbeinstativ (Monopod) mitdreht und den dämpfenden Effekt aufhebt.

Dadurch, dass das Einbeinstativ 40 an zwei Klemmstellen in dem Stativ 30 und der Spinne 10 befestigt werden kann, wird ein sehr präzise Verbindung der Hauptachse mit dem Stativ und damit eine sehr präzise Ausrichtung erzielt.

Ansonsten unterscheidet sich das Einbeinstativ 40 nicht von dem zuvor beschriebenen.

Es versteht sich, dass Einzelmerkmale der einzelnen Ausführungsformen, die beschrieben worden sind, auch beliebig miteinander kombiniert werden können, insofern technisch kein Widerspruch dadurch entsteht. Auch ist es möglich die verschiedenartigen Klemm- und Fixiervorrichtungen gegeneinander auszutauschen, genauso wie es auch denkbar ist über die in Fig. 4 dargestellten kombinierten Fuß- und Verriegelungselemente der Spinne 10 zusätzliche Füße anzufügen, bei denen es sich vorzugsweise um Gummifüße mit einer flachen Austandsfläche handelt.

Die erfindungsgemäße Spinne und die oben beschriebenen Systeme bieten damit neben dem modularen System, das den flexiblen Betrieb gestattet erstmal die Möglichkeit eines Kamera-Supports, insbesondere für den Reporterbereich, aber auch zu Aufnahme von Extremsportarten, für Dokumentationen sowie z. B. im semi-professionellen Bereich Hochzeitsvideos ohne eine Vielzahl unterschiedlicher Gerätschaften mitnehmen zu müssen.

## Patentansprüche

1. Spinne, insbesondere Mittelspinne, für ein Stativ (30) mit drei Standbeinen (31), umfassend:
einen Grundkörper (11),
drei Arme (12), die jeweils mit ihrem ersten Ende gelenkig an dem Grundkörper gelagert sind und an ihrem zweiten Ende zum lösbaren Verbinden mit einem entsprechenden Standbein (31) des Stativs mit einem ersten Verriegelungselement (22) einer Verriegelungseinrichtung als Gegenstück zu einem zweiten Verriegelungselement (23) der Verriegelungseinrichtung an dem jeweiligen Standbein (31) versehen sind, wobei die Arme (12) teleskopisch verriegelbar ausgestaltet sind, **dadurch gekennzeichnet, dass**
die drei Arme (12) als Stativbeine jeweils mit einer ersten Stufe (14) umfassend zwei parallel verlaufende Schenkel (16), die über ein Führungselement (18) verbunden sind und einer zweiten Stufe (15) aus wenigstens einem Schenkel (19) der in dem Führungselement (18) geführt und gehalten ist, ausgestaltet sind und dass der Grundkörper (11) zur Aufnahme eines Stativkopfes ausgebildet ist.

2. Spinne nach Anspruch 1, bei der die Arme (12) an ihrem zweiten Ende jeweils Füße (27) aufweisen.

3. Spinne nach Anspruch 2, bei der zusätzlich zu den vorhandenen Füßen (27) Gummifüße wahlweise über das erste Verriegelungselement (22) der Verriegelungseinrichtung lösbar mit dem jeweiligen Arm (12) verbindbar sind.

4. Spinne nach einem der vorstehenden Ansprüche, bei der das erste (22) oder das zweite Verriegelungselement zumindest teilweise hohlzylindrisch ausgestaltet ist und das zweite (23) oder das erste Verriegelungselement ebenfalls hohlzylindrisch ausgebildet ist und wenigstens über die Länge des ersten oder zweiten Verriegelungselements derart ausgespart ist, dass das erste (22) oder zweite Verriegelungselement in der Aussparung aufnehmbar ist, so dass ein Verrieglungsstift (25) durch die hohlzylindrischen Teile einführbar ist, um den jeweiligen Arm (12) and dem jeweiligen Standbein (3) festzulegen.

5. Spinne nach Anspruch 4, bei der der Hohlzylinder des zweiten (23) oder ersten Verriegelungselements im Bereich der Aussparung eine im Querschnitt höchstens halbkreisförmige Schale bildet aufweist.

6. Spinne nach Anspruch 4, bei der der Hohlzylinder des zweiten (23) oder ersten Verriegelungselements im Bereich der Aussparung vollständig unterbrochen (64) ist und an den der Aussparung zugewandten Stirnflächen des Hohlzylinders höchstens halbkreisförmige Schultern (62) gebildet sind.

7. Spinne nach einem der vorstehenden Ansprüche, bei dem der Grundkörper (11) eine mittige durchgehende Aufnahmeöffnung (28) für ein Einbeinstativ (40) aufweist.

8. Spinne nach Anspruch 7, ferner umfassend eine Klemmeinrichtung (29) zum lösbaren Verriegeln des Einbeinstativs (40).

9. Spinne nach einem der vorstehenden Ansprüche, bei der der Grundkörper (11) eine Befestigungsvorbereitung (50) für den Stativkopf (50) aufweist.

10. Spinne nach einem der vorstehenden Ansprüche, bei der in dem Führungselement (18) eine Klemmeinrichtung (21) zum Klemmen der zweiten Stufe vorgesehen ist.

11. Spinne nach einem der vorstehenden Ansprüche, bei der sich das der ersten Stufe (14) zugewandte Ende des Schenkels (19) der zweiten Stufe beidseits an der Innenseite der parallelen Schenkel (16) der ersten Stufe (14) abstützt.

12. Set umfassend eine Spinne (10) nach einem der vorstehenden Ansprüche und ein Dreibeinstativ (30), wobei die Spinne (10) wahlweise lösbar an dem Dreibeinstativ (30) befestigbar ist oder als eigenständiges Stativ fungiert.

13. Set nach Anspruch 12, ferner umfassend ein Einbeinstativ (40), das wahlweise durch eine Öffnung in einem Koppelstück (35) des Stativs (30), an dem die drei Standbeine (31) angelenkt sind und in die Aufnahmeöffnung (28) der Spinne (10) einführbar und mittels der Klemmvorrichtung (29) der Spinne (10) festlegbar ist.

14. Set nach einem der Ansprüche 12 oder 13, bei dem das Koppelstück (35) des Stativs (30) eine weitere Klemmeinrichtung (51, 45) zum Festlegen des Einbeinstativs (40) aufweist.

## Claims

1. Spreader, in particular mid-level spreader, for a stand (30) having three supporting legs (31), comprising:
a base unit (11),
three arms (12) which are in each case mounted by their first end pivotably on the base unit and at their second end, for releasable connection to a corresponding supporting leg (31) of the stand, are provided with a first locking element (22) of a locking device as a counterpart to a second locking element (23) of the locking device on the respective supporting leg (31), the arms (12) being designed to be capable of locking telescopically, **characterised in that**
the three arms (12) are designed as supporting legs each having a first stage (14) comprising two parallel branches (16) which are connected by a guide element (18) and a second stage (15) consisting of at least one branch (19) which is guided and held in the guide element (18), and **in that** the base unit (11) is constructed to receive a stand head.

2. Spreader according to claim 1, in which the arms (12) each have feet (27) at their second end.

3. Spreader according to claim 2, in which, in addition to the existing feet (27), rubber feet optionally can be releasably connected to the respective arm (12) by the first locking element (22) of the locking device.

4. Spreader according to any of the preceding claims, in which the first (22) or the second locking element is at least partially of hollow cylindrical construction, and the second (23) or the first locking element is likewise of hollow cylindrical construction and recessed at least over the length of the first or second locking element in such a way that the first (22) or second locking element can be received in the recess, so that a locking pin (25) can be introduced through the hollow cylindrical parts in order to fix the respective arm (12) on the respective supporting leg (3).

5. Spreader according to claim 4, in which the hollow cylinder of the second (23) or first locking element in the region of the recess forms a dish which is at most semicircular in cross-section.

6. Spreader according to claim 4, in which the hollow cylinder of the second (23) or first locking element in the region of the recess is completely interrupted (64), and at the end faces of the hollow cylinder facing towards the recess are formed at most semicircular shoulders (62).

7. Spreader according to any of the preceding claims, in which the base unit (11) has a central through-opening (28) for receiving a monopod (40).

8. Spreader according to claim 7, further comprising a clamping device (29) for releasably locking the monopod (40).

9. Spreader according to any of the preceding claims, in which the base unit (11) has a fastening arrangement (50) for the head (50) of the stand.

10. Spreader according to any of the preceding claims, in which in the guide element (18) is provided a clamping device (21) for clamping the second stage.

11. Spreader according to any of the preceding claims, in which the end of the branch (19) of the second stage which faces towards the first stage (14) is supported on both sides of the inner side of the parallel branches (16) of the first stage (14).

12. Set comprising a spreader (10) according to any of the preceding claims and a tripod (30), wherein the spreader (10) is optionally releasably attachable to the tripod (30) or functions as an independent stand.

13. Set according to claim 12, further comprising a monopod (40) which optionally can be introduced through an opening in a coupling piece (35) of the stand (30), to which the three supporting legs (31) are linked, and into the receiving opening (28) of the spreader (10), and fixed by means of the clamping device (29) of the spreader (10).

14. Set according to either of claims 12 or 13, in which the coupling piece (35) of the stand (30) has a further clamping device (51, 45) for fixing the monopod (40).

## Revendications

1. Croisillon, en particulier croisillon central, pour un statif (30) à trois jambes d'appui (31), comprenant :
un corps de base (11),
trois bras (12), montés chacun de manière articulée sur le corps de base par leur première extrémité et pourvus à leur deuxième extrémité d'un premier élément de verrouillage (22) d'un dispositif de verrouillage en tant que pièce opposée à un deuxième élément de verrouillage (23) du dispositif de verrouillage sur chaque jambe d'appui (31), pour un raccordement amovible avec la jambe d'appui (31) correspondante du statif, les bras (12) étant réalisés de manière à être télescopiquement verrouillables, **caractérisé en ce que**
les trois bras (12) sont réalisés comme jambes de statif présentant chacune un premier degré (14) comprenant deux branches (16) s'étendant parallèlement l'une à l'autre, reliées l'une à l'autre par un élément de guidage (18) et un deuxième degré (15) constitué d'au moins une branche (19) coulissant et maintenue dans l'élément de guidage (18), et **en ce que** le corps de base (11) est prévu pour la réception d'une tête de statif.

2. Croisillon selon la revendication 1, où les bras (12) sont pourvus de pieds (27) à leur deuxième extrémité respective.

3. Croisillon selon la revendication 2, où en plus des pieds (27) existants, des pieds en caoutchouc peuvent être respectivement raccordés en option de manière amovible au bras (12) correspondant par le premier élément de verrouillage (22) du dispositif de verrouillage.

4. Croisillon selon l'une des revendications précédentes, où le premier (22) ou le deuxième élément de verrouillage est réalisé au moins partiellement sous une forme de cylindre creux, et où le deuxième (23) ou le premier élément de verrouillage est également réalisé sous une forme de cylindre creux, et est évidé au moins sur la longueur du premier ou du deuxième élément de verrouillage, de telle manière que le premier (22) ou le deuxième élément de verrouillage est logeable dans l'évidement, si bien qu'un axe de verrouillage (25) est insérable dans les parties cylindriques pour bloquer le bras (12) et la jambe d'appui (3) correspondants.

5. Croisillon selon la revendication 4, où le cylindre creux du deuxième (23) ou du premier élément de verrouillage comporte au niveau de l'évidement une coque de section en forme de demi-cercle, au plus.

6. Croisillon selon la revendication 4, où le cylindre creux du deuxième (23) ou du premier élément de verrouillage est entièrement interrompu (64) au niveau de l'évidement et où des épaulements (62) en forme de demi-cercle, au plus, sont formés sur les faces frontales du cylindre creux opposées à l'évidement.

7. Croisillon selon l'une des revendications précédentes, où le corps de base (11) présente une ouverture de réception (28) continue centrale pour un statif à une jambe (40).

8. Croisillon selon la revendication 7, comprenant en outre un dispositif de serrage (29) pour le verrouillage et le déverrouillage du statif à une jambe (40).

9. Croisillon selon l'une des revendications précédentes, où le corps de base (11) comporte une aide à la fixation (50) pour la tête de statif (50).

10. Croisillon selon l'une des revendications précédentes, où un dispositif de serrage (21) est prévu dans l'élément de guidage (18) pour le serrage du deuxième degré.

11. Croisillon selon l'une des revendications précédentes, où l'extrémité de la branche (19) du deuxième degré qui est opposée au premier degré (14) s'appuie sur chaque côté intérieur des branches (16) parallèles du premier degré (14).

12. Ensemble comprenant un croisillon (10) selon l'une des revendications précédentes et un statif à trois jambes (30), ledit croisillon (10) pouvant être fixé en option de manière amovible au statif à trois jambes (30) ou pouvant servir comme statif indépendant.

13. Ensemble selon la revendication 12, comprenant en outre un statif à une jambe (40), qui est insérable en option par un orifice dans une pièce d'accouplement (35) du statif (30) à laquelle les trois jambes d'appui (31) sont articulées et dans l'ouverture de réception (28) du croisillon (10), et qui peut être fixé au moyen du dispositif de serrage (29) du croisillon (10).

14. Ensemble selon la revendication 12 ou 13, où la pièce d'accouplement (35) du statif (30) comporte un autre dispositif de serrage (51, 45) pour la fixation du statif à une jambe (40).
